(19) **Europäisches Patentamt**
**European Patent Office**
**Office européen des brevets**

(11) **EP 2 434 451 A2**

(12) **EUROPEAN PATENT APPLICATION**
published in accordance with Art. 153(4) EPC

(43) Date of publication:
**28.03.2012 Bulletin 2012/13**

(21) Application number: **11773646.2**

(22) Date of filing: **28.06.2011**

(51) Int Cl.:
*G06Q 50/00* (2012.01)   *G06F 19/00* (2011.01)

(86) International application number:
**PCT/KR2011/004675**

(87) International publication number:
**WO 2012/002686 (05.01.2012 Gazette 2012/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.07.2010   KR 20100063370**

(71) Applicant: **Korea Gas Corporation R & D Division Ansan-si, Gyeonggi-do 426-790 (KR)**

(72) Inventors:
• **YOON, Ik Keun**
  **Ansan-si**
  **Gyeonggi-do 425-873 (KR)**
• **Oh, Shin-Kyu**
  **Seoul 138-912 (KR)**

(74) Representative: **Stöckeler, Ferdinand**
**Schoppe, Zimmermann, Stöckeler & Zinkler**
**Patentanwälte**
**Postfach 246**
**82043 Pullach bei München (DE)**

(54) **APPARATUS AND METHOD FOR IMPLEMENTING A FREQUENCY ANALYSIS MODULE OF A QUANTITATIVE RISK ASSESSMENT SYSTEM**

(57)   The present invention relates to a frequency analysis module implementing apparatus and method of a quantitative risk assessment system. The apparatus includes an accident scenario generation unit for generating a plurality of accident scenarios that define questions and formulas, which previously obtained from an expert, according to each accident to perform accident frequency and risk analysis; a module generation unit for generating a plurality of modules individually corresponding to the plurality of accident scenarios; and a module driving unit for driving a module selected in correspondence with the accident situation from among a plurality of modules when the accident situation such as a leak of a hazardous material occurs. The module driven by the module driving unit performs accident frequency and risk analysis by calling an accident scenario corresponding to the module, providing a question defined by the accident scenario, and applying an answer input from a user in response to the question and a formula defined by the accident scenario.

**EP 2 434 451 A2**

**Description**

Technical Field

The present invention relates to a frequency analysis module implementing apparatus and method of a quantitative risk assessment system, and more particularly, to a frequency analysis module implementing apparatus and method of a quantitative risk assessment system, capable of performing quantitative risk assessment by merely selecting a module from among a plurality of modules implemented by using questions and formulas which previously obtained from a frequency analysis theory by an expert to perform frequency analysis.

Background Art

Currently, quantitative risk assessment is regarded as an essential safety management technology in hazardous oil-based industries such as petroleum, chemical, and gas industries. However, due to the complexity of accident frequency analysis and risk assessment, safety managers in various plants may not easily do their works.

Quantitative risk assessment includes generating accident scenarios, performing stochastic frequency analysis on each accident scenario, assessing consequence/effect when an accident situation occurs, and estimating a risk level.

Here, due to difficulties of calculation, frequency analysis and consequence analysis are separately developed as professional programs and are commercialized. However, due to fundamental characteristics of quantitative assessment in which frequency analysis and consequence analysis are associated with each other, a standard system for quantitative assessment may not be easily formed and thus a system in which frequency analysis and consequence analysis are integrated is not yet currently provided.

A program that is the closest to quantitative assessment from among currently developed programs is Phast-Risk by Det Norske Veritas (DNV). Even in this program, a user has to manually input a value by analyzing the frequency of a leak accident.

As described above, although frequency analysis requires experts, since the number of risk experts for a company having a plurality of large plants is generally restrictive, if demands for risk assessment are increased, work overload may be caused and, in some cases, the company may require more labor costs for external experts.

Disclosure of the Invention

Technical Problem

The present invention provides a frequency analysis module implementing apparatus and method of a quantitative risk assessment system, capable of performing quantitative risk assessment by merely selecting a module from among a plurality of modules individually implemented in corrrespondance with accident scenarios required to perform accident frequency analysis and defined according to accident situations by an expert.

The present invention also provides a frequency analysis module implementing apparatus and method of a quantitative risk assessment system, capable of performing accident frequency analysis even without an expert by merely applying an answer input from a user in response to a question of each accident scenario and a formula of the accident scenario by using questions and formulas, which previously defined by the expert, according to accident scenarios.

Technical Solution

According to an aspect of the present invention, there is provided a frequency analysis module implementing apparatus of a quantitative risk assessment system according to a leak of a hazardous material, the apparatus including an accident scenario generation unit for generating a plurality of accident scenarios that define questions and formulas, which previously obtained from an expert, according to each accident situation to perform accident frequency and risk analysis; a module generation unit for generating a plurality of modules individually corresponding to the plurality of accident scenarios; and a module driving unit for driving a module selected in correspondence with a accident situation from among the plurality of modules when the accident situation such as a leak of a hazardous material occurs.

In this case, the module driven by the module driving unit may perform accident frequency and risk analysis by calling an accident scenario corresponding to the module, providing a question defined by the accident scenario, and applying an answer input from a user in response to the question and a formula defined by the accident scenario.

Also, the module may include an accident frequency analysis engine for performing accident frequency analysis by applying an answer input from a user and a formula defined by the accident scenario; and a risk analysis engine for performing risk analysis on the accident situation by applying an answer input from a user, a formula defined by the accident scenario and a result of the accident frequency analysis performed by the accident frequency analysis engine.

Here, the plurality of modules may be individually disposed in regions designated by the user to perform accident frequency and risk analysis and assessment.

Meanwhile, when the module is generated, the module generation unit may set a leak material and a leak condition that satisfy a condition of an accident situation corresponding to the accident scenario, and may set a combination of one or more equipments that cause the accident situation.

Also, when the module is generated, the module generation unit may set a connection between the module and an accident scenario corresponding to the module.

Meanwhile, the apparatus may further include a module selection unit for selecting at least one of the plurality of modules according to a module selection command of the user when a leak of a hazardous material occurs, and may further include an input/output unit for receiving a module selection command from the user and outputting results of accident frequency and risk analysis performed by driving the module.

According to another aspect of the present invention, there is provided a frequency analysis module implementing method of a quantitative risk assessment system according to a leak of a hazardous material, the method including generating a plurality of accident scenarios that define questions and formulas, which previously obtained from an expert, according to each accident situation to perform accident frequency and risk analysis; generating a plurality of modules individually corresponding to the plurality of accident scenarios; driving a module selected in correspondence with the accident situation from among the plurality of modules when an accident situation such as a leak of a hazardous material occurs; and performing accident frequency and risk analysis by calling an accident scenario corresponding to the driven module, providing a question defined by the accident scenario, and applying an answer input from a user in response to the question and a formula defined by the accident scenario.

Also, the performing of the accident frequency and risk analysis may include performing accident frequency analysis by applying an answer input from a user in response to a question defined by an accident scenario corresponding to the module and a formula to an accident frequency analysis engine of the module; and performing risk analysis on the accident situation by applying an answer input from a user, a formula and a result of the accident frequency analysis performed by the accident frequency analysis engine to a risk analysis engine of the module.

Meanwhile, the generating of the plurality of modules may further include, setting a leak material and a leak condition that satisfy a condition of an accident situation corresponding to the accident scenario when the module is generated; and setting a combination of one or more equipments that cause the accident situation.

Also, the generating of the plurality of modules may further include, setting a connection between the module and an accident scenario corresponding to the module when the module is generated.

Furthermore, the method may further include selecting at least one of the plurality of modules according to a module selection command of the user when a leak of a hazardous material occurs, and may further include outputting results of accident frequency and risk analysis performed by driving the module.

Brief Description of the Drawings

FIG. 1 is a block diagram of a frequency analysis module implementing apparatus of a quantitative risk assessment system, according to an embodiment of the present invention.

FIG. 2 is a diagram for describing accident scenarios used in a frequency analysis module implementing apparatus of a quantitative risk assessment system, according to an embodiment of the present invention.

FIG. 3 is a block diagram of a module generated by a frequency analysis module implementing apparatus of a quantitative risk assessment system, according to an embodiment of the present invention.

FIG. 4 is a diagram showing connections between accident scenarios and modules, according to an embodiment of the present invention.

FIG. 5 is a diagram for describing operation of a frequency analysis module implementing apparatus of a quantitative risk assessment system, according to an embodiment of the present invention.

FIGS. 6 and 7 are flowcharts of a frequency analysis module implementing method of a quantitative risk assessment system, according to an embodiment of the present invention.

Best mode for carrying out the Invention

Hereinafter, the present invention will be described in detail by explaining embodiments of the invention with reference to the attached drawings.

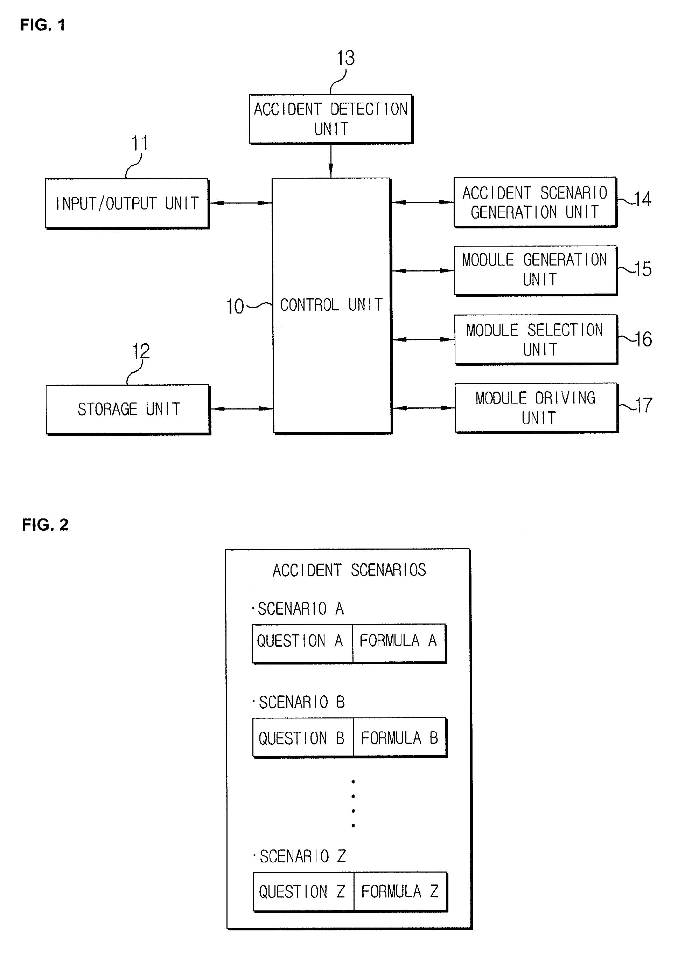

FIG. 1 is a block diagram of a frequency analysis module implementing apparatus of a quantitative risk assessment system, according to an embodiment of the present invention.

As illustrated in FIG. 1, the frequency analysis module implementing apparatus includes a control unit 10, an input/output unit 11, a storage unit 12, an accident detection unit 13, an accident scenario generation unit 14, a module generation unit 15, a module selection unit 16, and a module driving unit 17. In this case, the control unit 10 controls operations of other elements.

The input/output unit 11 receives questions and formulas according to accident situations from an expert. Also, the input/output unit 11 receives module selection information and etc. from a user. Meanwhile, the input/output unit 11 outputs to the user a question of an accident scenario corresponding to the module selection information. Furthermore, the input/output unit 11 externally outputs a result of quantitative risk assessment.

Here, the input/output unit 11 may be, for example, a touch screen. Although the input/output unit 11 integrally includes an input unit and an output unit in FIG.

1, alternatively, the input unit and the output unit may be separately included.

The storage unit 12 stores accident scenarios and stores questions and formulas defined by the accident scenarios. Also, the storage unit 12 may store connections set between the accident scenarios and modules. Furthermore, the storage unit 12 may store results of quantitative risk assessment.

The accident detection unit 13 detects an accident situation such as a gas leak. For example, the accident detection unit 13 detects a leak of a certain material, and detects a scale of the leak amount. Also, the accident detection unit 13 may detect an error of equipment having a leak of a certain material.

If questions and formulas according to accident situations are input from an expert, the accident scenario generation unit 14 classifies the input questions and formulas according to the accident situations and generates a plurality of accident scenarios. In this case, the accident scenarios are generated in correspondence with different accident situations.

For example, the accident scenario generation unit 14 generates accident scenarios in correspondence with a leak caused by a pressure increase or a discharge failure, a leak caused by a loss of wholesomeness in a process pipe, a valve, a flange, or a device, a leak caused by opening of a front or rear valve during a monostat is being repaired, a leak caused by a broken pipe in heavy equipment, and a leak caused by internal-leakage or displacement in a PV(Purge Valve).

In this case, each accident scenario defines a question and formula required to perform accident frequency analysis on each accident situation.

The module generation unit 15 generates a plurality of modules corresponding to the accident scenarios generated by the accident scenario generation unit 14. In this case, the module generation unit 15 generates a plurality of modules according to conditions corresponding to accident situations.

For example, the module generation unit 15 generates a module by setting a leak material and a leak condition that satisfy a condition of an accident situation corresponding to any one accident scenario, and setting equipment that causes the accident situation, e.g., a liquefied natural gas (LNG) pump, an RPM(Remote Butterfly type Motorized) valve, an RVM(Remote Gate type Motorized) valve, or a PSV(Pressure Safety Valve). Also, the module generation unit 15 generates a module in connection with an accident scenario corresponding to the accident situation.

Here, the module generation unit 15 may generate and provide a manual for selecting a module corresponding to an accident scenario of each accident situation to the user, thereby allowing the user to easily select a module according to an accident situation.

In this case, the generated modules are individually disposed in regions designated by the user to perform accident frequency and risk analysis and assessment, e.g., a filter region, a heater region, a static pressure region, and a measuring region.

The module selection unit 16 selects at least one of the modules disposed in the regions, according to the user's module selection command input via the input/output unit 11.

If at least one module is selected by the module selection unit 16, the module driving unit 17 drives the selected module to perform accident frequency and risk analysis and assessment in a region corrresponding to the selected module.

In this case, the module selected by the module driving unit 17 performs accident frequency and risk analysis by calling an accident scenario connected to the module, providing a question of the accident scenario to the user, and applying an answer input in response to the question and a formula of the accident scenario.

FIG. 2 is a diagram for describing accident scenarios used in a frequency analysis module implementing apparatus of a quantitative risk assessment system, according to an embodiment of the present invention.

As illustrated in FIG. 2, accident scenarios are individually generated in correspondence with accident situations A to Z. In this case, each accident scenario defines a question and formula required to perform accident frequency and risk analysis on an accident situation corresponding to the accident scenario.

For example, scenario A is an accident scenario corresponding to the accident situation A, and defines question A and formula A required to perform accident frequency and risk analysis on the accident situation A. Also, scenario B is an accident scenario corresponding to the accident situation B, and defines question B and formula B required to perform accident frequency and risk analysis on the accident situation B. Likewise, scenario Z is an accident scenario corresponding to the accident situation Z, and defines question Z and formula Z required to perform accident frequency and risk analysis on the accident situation Z.

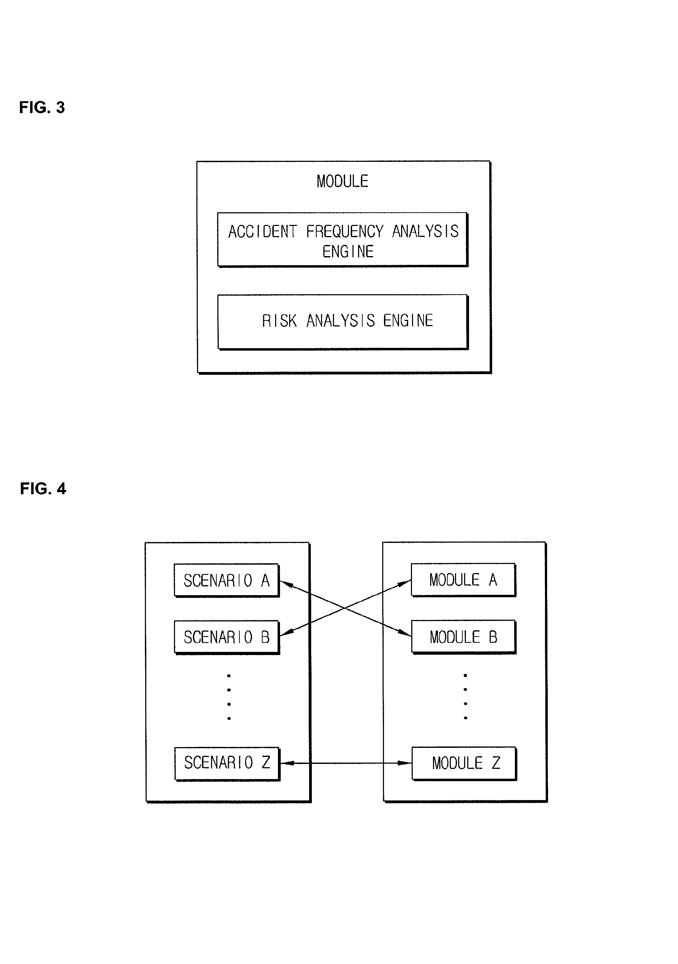

FIG. 4 is a diagram showing connections between accident scenarios and modules, according to an embodiment of the present invention.

As illustrated in FIG. 4, accident scenarios individually generated in corrrespondance with accident situations A to Z, e.g., scenarios A to Z, are connected to modules individually generated in corrrespondance with the accident scenarios.

For example, the scenario A is connected to module B, and the scenario B is connected to module A. Also, the scenario Z is connected to module Z. Connections between the accident scenarios and the modules are not sequentially set.

Accordingly, if a user selects the module B, the module B is driven. In this case, the module B performs accident frequency and risk analysis by calling the scenario A corresponding to the module B, providing question A to the user, and applying an answer input in response to the question A to formula A.

FIG. 3 is a block diagram of a module generated by a frequency analysis module implementing apparatus of a quantitative risk assessment system, according to an embodiment of the present invention.

As illustrated in FIG. 3, each module corresponding to an accident scenario includes an accident frequency analysis engine and a risk analysis engine.

Accordingly, when a certain accident situation occurs, if any one of a plurality of modules is driven, the module drives the accident frequency analysis engine and the risk analysis engine.

Here, the accident frequency analysis engine performs accident frequency analysis by applying an answer input from a user in response to a question of an accident scenario corresponding to the module and a formula of the accident scenario.

Also, the risk analysis engine performs risk analysis on a corresponding accident situation by applying an answer input from a user in response to a question of an accident scenario corresponding to the module, a formula of the accident scenario and a result of the accident frequency analysis performed by the accident frequency analysis engine.

After that, the accident frequency analysis engine and the risk analysis engine output results of the accident frequency and risk analysis.

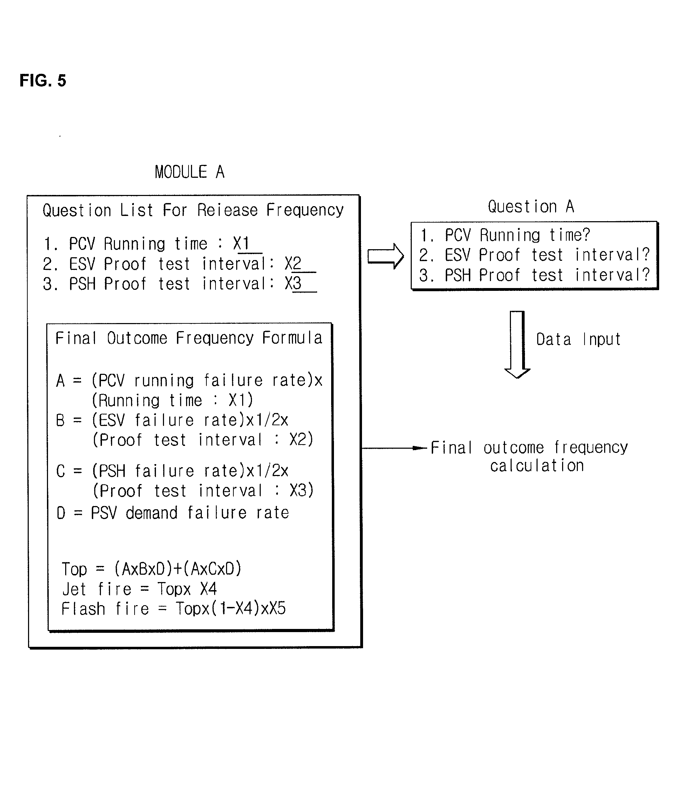

FIG. 5 is a diagram for describing operation of a frequency analysis module implementing apparatus of a quantitative risk assessment system, according to an embodiment of the present invention. In FIG. 5, it is assumed that module A and scenario A are connected to each other.

As illustrated in FIG. 5, if the module A is driven, the module A calls the scenario A corresponding to the module A. In this case, the scenario A includes question A and formula A.

The question A defines the following questions.

1. PCV Running time? (X1)
2. ESV Proof test interval? (X2)
3. PSH Proof test interval? (X3)

Also, the formula A defines the following formulas.

A = (PVC running failure rate) x (Running time: X1)
B = (ESV failure rate) x 1/2 x (Proof test interval: X2)
C = (PSH failure rate) x 1/2 x (Proof test interval: X3)
D = PSV demand failure rate

$$\text{Top} = (A \times B \times D) + (A \times C \times D)$$

$$\text{Jet fire} = \text{Top} \times X4$$

$$\text{Flash fire} = \text{Top} \times (1 - X4) \times X5$$

Accordingly, the module A performs accident frequency and risk analysis on accident situation A by providing the question A to a user and applying X1, X2, and X3 of an answer input in response to the question A to the formula A.

Operation of the frequency analysis module implementing apparatus of the quantitative risk assessment system will now be described.

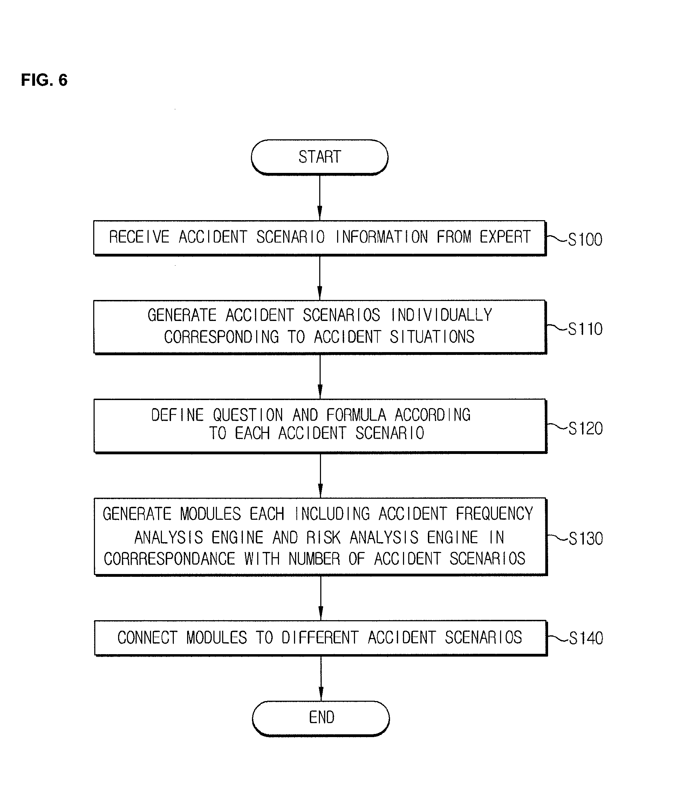

FIG. 6 is a flowchart of a frequency analysis module generating method of a quantitative risk assessment system, according to an embodiment of the present invention.

Referring to FIG. 6, in the quantitative risk assessment system, if system receives accident scenario information corresponding to accident situation from an expert(operation S100), accident scenarios individually corresponding to the accident situations are generated based on the accident scenario information(operation S110).

In this case, a question and formula required to perform accident frequency and risk analysis is defined according to an accident scenario corresponding to each accident situation (operation S120).

If the accident scenarios individually corresponding to the accident situations are completely generated, modules are generated in corrrespondance with the number of accident scenarios (operation S130). In this case, each of the modules generated in operation S130 includes an accident frequency analysis engine and a risk analysis engine.

Lastly, if the modules are completely generated in operation S130, each module is connected to each accident scenario based on correspondence to the module. (operation S140).

Although not shown in FIG. 6, In operation S140, the modules connected to the accident scenarios are individually disposed in regions designated by a user to perform accident frequency and risk analysis and assessment, e.g., a filter region, a heater region, a static pressure region, and a measuring region, thereby completing a basic environment of the quantitative risk assessment system for performing accident frequency and risk analysis.

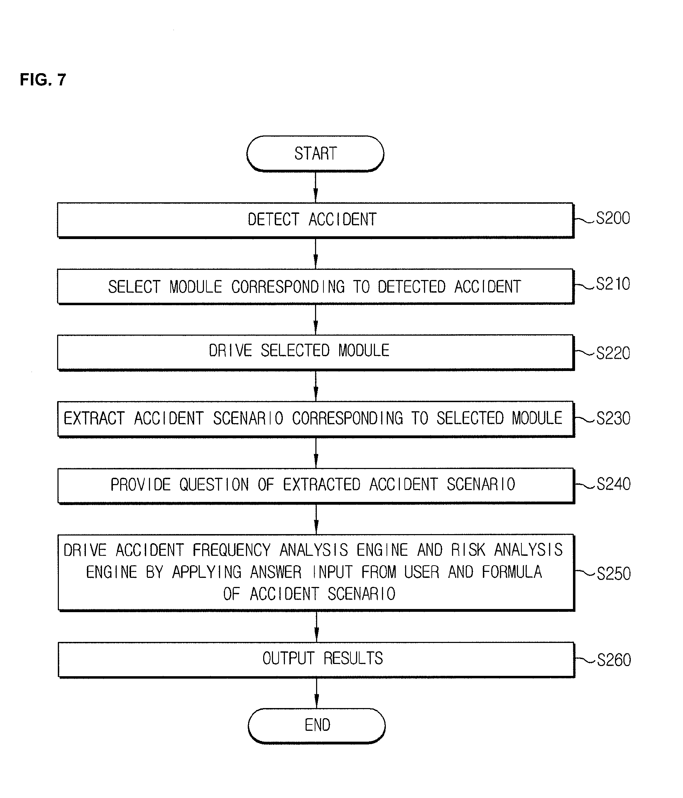

FIG. 7 is a flowchart of a frequency analysis module driving method of a quantitative risk assessment system, according to an embodiment of the present invention.

Referring to FIG. 7, in the quantitative risk assessment system, if an accident situation, e.g., a gas leak, caused by various reasons is detected (operation S200), a user selects a module corresponding to the detected accident situation (operation S21 0). In this case, the quantitative risk assessment system drives the module selected in operation S210 (operation S220).

Then, an accident scenario corresponding to the selected module is extracted (operation S230), and a question of the extracted accident scenario is provided to the user(operation S240).

In this case, the user inputs an answer in response to the question, and the module drives an accident frequency analysis engine and a risk analysis engine by applying the answer input from the user and a formula of the accident scenario (operation S250).

Accordingly, by driving the accident frequency analysis engine and the risk analysis engine of the selected module, the quantitative risk assessment system performs accident frequency and risk analysis on a leak of a hazardous material, and externally outputs analysis results(operation S260).

As such, quantitative risk assessment on the accident situation is completed.

While the present invention has been particularly shown and described with reference to exemplary embodiments thereof, it will be understood by those of ordinary skill in the art that various changes in form and details may be made therein without departing from the spirit and scope of the present invention as defined by the following claims.

Industrial Applicability

According to the present invention, if various accident situations are predicted in advance, accident scenarios required to perform frequency analysis are defined by an expert according to the accident situations, and modules are individually implemented in corrrespondance with the accident scenarios, quantitative risk assessment may be easily performed by merely selecting a module according to a situation.

Also, according to the present invention, when a module is selected, if a question defined by an accident scenario corresponding to the module is provided and quantitative risk assessment is performed by using an answer input in response to the question and a formula defined by the accident scenario, the quantitative risk assessment may be easily performed even without an expert.

Claims

1. A frequency analysis module implementing apparatus of a quantitative risk assessment system according to a leak of a hazardous material, the apparatus comprising:

an accident scenario generation unit for generating a plurality of accident scenarios that define questions and formulas, which previously obtained from an expert, according to each accident to perform accident frequency and risk analysis;

a module generation unit for generating a plurality of modules individually corresponding to the plurality of accident scenarios; and

a module driving unit for driving a module selected in correspondence a the accident situation from among the plurality of modules when the accident situation such as a leak of a hazardous material occurs,

wherein the module driven by the module driving unit performs accident frequency and risk analysis by calling an accident scenario corresponding to the module, providing a question defined by the accident scenario, and applying an answer input from a user in response to the question and a formula defined by the accident scenario.

2. The apparatus of claim 1, wherein the module comprises:

an accident frequency analysis engine for performing accident frequency analysis by applying an answer input from a user and a formula defined by the accident scenario; and

a risk analysis engine for performing risk analysis on the accident situation by applying the answer input from a user and the formula defined by the accident scenario based on a result of the accident frequency analysis performed by the accident frequency analysis engine.

3. The apparatus of claim 1, wherein the plurality of modules are individually disposed in regions designated by the user to perform accident frequency and risk analysis and assessment.

4. The apparatus of claim 1, wherein, when the module is generated, the module generation unit sets a leak material and a leak condition that satisfy a condition of an accident situation corresponding to the accident scenario, and sets a combination of one or more equipments that cause the accident situation.

5. The apparatus of claim 1, wherein, when the module is generated, the module generation unit sets a connection between the module and an accident scenario corresponding to the module.

6. The apparatus of claim 1, further comprising a module selection unit for selecting at least one of the plurality of modules according to a module selection command of the user when a leak of a hazardous material occurs.

7. The apparatus of claim 1, further comprising an input/output unit for receiving a module selection command from the user and outputting results of accident frequency and risk analysis performed by driving the module.

8. A frequency analysis module implementing method of a quantitative risk assessment system according to a leak of a hazardous material, the method comprising:

generating a plurality of accident scenarios that define questions and formulas, which previously obtained from an expert, according to each accident situation to perform accident frequency and risk analysis;
generating a plurality of modules individually corresponding to the plurality of accident scenarios;
driving a module selected in correspondence with a accident situation from among the plurality of modules when the accident situation such as a leak of a hazardous material occurs; and
performing accident frequency and risk analysis by calling an accident scenario corresponding to the driven module, providing a question defined by the accident scenario, and applying an answer input from a user in response to the question and a formula defined by the accident scenario.

9. The method of claim 8, wherein the performing of the accident frequency and risk analysis comprises:

performing accident frequency analysis by applying an answer input from a user in response to a question defined by an accident scenario corresponding to the module and a formula to an accident frequency analysis engine of the module; and
performing risk analysis on the accident situation by applying the answer input from a user, the formula and a result of the accident frequency analysis performed by the accident frequency analysis engine to a risk analysis engine of the module.

10. The method of claim 8, wherein the generating of the plurality of modules further comprises:

setting a leak material and a leak condition that satisfy a condition of an accident situation corresponding to the accident scenario when the module is generated; and
setting a combination of one or more equipments that cause the accident situation.

11. The method of claim 8, wherein the generating of the plurality of modules further comprises setting a connection between the module and an accident scenario corresponding to the module when the module is generated.

12. The method of claim 8, further comprising selecting at least one of the plurality of modules according to a module selection command of the user when a leak of a hazardous material occurs.

13. The method of claim 8, further comprising outputting results of accident frequency and risk analysis performed by driving the module.

**FIG. 1**

**FIG. 2**

**FIG. 3**

MODULE

ACCIDENT FREQUENCY ANALYSIS ENGINE

RISK ANALYSIS ENGINE

**FIG. 4**

SCENARIO A → MODULE A

SCENARIO B → MODULE B

⋮ ⋮

SCENARIO Z → MODULE Z

**FIG. 5**

MODULE A

Question List For Release Frequency

1. PCV Running time : X1
2. ESV Proof test interval: X2
3. PSH Proof test interval: X3

Final Outcome Frequency Formula

A = (PCV running failure rate)x
    (Running time : X1)
B = (ESV failure rate)x1/2x
    (Proof test interval : X2)
C = (PSH failure rate)x1/2x
    (Proof test interval : X3)
D = PSV demand failure rate

Top = (AxBxD)+(AxCxD)
Jet fire = Topx X4
Flash fire = Topx(1-X4)xX5

Question A

1. PCV Running time?
2. ESV Proof test interval?
3. PSH Proof test interval?

Data Input

Final outcome frequency
    calculation

**FIG. 6**

START

⇩

RECEIVE ACCIDENT SCENARIO INFORMATION FROM EXPERT — S100

⇩

GENERATE ACCIDENT SCENARIOS INDIVIDUALLY
CORRESPONDING TO ACCIDENT SITUATIONS — S110

⇩

DEFINE QUESTION AND FORMULA ACCORDING
TO EACH ACCIDENT SCENARIO — S120

⇩

GENERATE MODULES EACH INCLUDING ACCIDENT FREQUENCY
ANALYSIS ENGINE AND RISK ANALYSIS ENGINE IN
CORRRESPONDANCE WITH NUMBER OF ACCIDENT SCENARIOS — S130

⇩

CONNECT MODULES TO DIFFERENT ACCIDENT SCENARIOS — S140

⇩

END

**FIG. 7**

```
                    ┌─────────────────┐
                    │      START      │
                    └────────┬────────┘
                             │
         ┌───────────────────▼───────────────────┐
         │           DETECT ACCIDENT             │──S200
         └───────────────────┬───────────────────┘
                             │
         ┌───────────────────▼───────────────────┐
         │ SELECT MODULE CORRESPONDING TO DETECTED ACCIDENT │──S210
         └───────────────────┬───────────────────┘
                             │
         ┌───────────────────▼───────────────────┐
         │          DRIVE SELECTED MODULE         │──S220
         └───────────────────┬───────────────────┘
                             │
         ┌───────────────────▼───────────────────┐
         │ EXTRACT ACCIDENT SCENARIO CORRESPONDING TO SELECTED MODULE │──S230
         └───────────────────┬───────────────────┘
                             │
         ┌───────────────────▼───────────────────┐
         │ PROVIDE QUESTION OF EXTRACTED ACCIDENT SCENARIO │──S240
         └───────────────────┬───────────────────┘
                             │
         ┌───────────────────▼───────────────────┐
         │ DRIVE ACCIDENT FREQUENCY ANALYSIS ENGINE AND RISK ANALYSIS │
         │ ENGINE BY APPLYING ANSWER INPUT FROM USER AND FORMULA │──S250
         │           OF ACCIDENT SCENARIO         │
         └───────────────────┬───────────────────┘
                             │
         ┌───────────────────▼───────────────────┐
         │            OUTPUT RESULTS              │──S260
         └───────────────────┬───────────────────┘
                             │
                    ┌────────▼────────┐
                    │       END       │
                    └─────────────────┘
```